# EUROPEAN PATENT APPLICATION

(11) **EP 4 714 250 A1**
(43) Date of publication of application: **25.03.2026**
(21) Application number: 24201179.9
(22) Date of filing: 18.09.2024
(51) Int. Cl.: A01D 41/127

(54) **COMBINE HARVESTER FEED RATE CONTROL**

(71) Applicant: CNH Industrial Belgium N.V., 8210 Zedelgem (BE)
(72) Inventor: Vandewalle, Bert, 8210 Zedelgem (BE); Leenknegt, Arno, 8210 Zedelgem (BE); Cornette, Lucas, 8210 Zedelgem (BE); Jongmans, Dré W.J., 8210 Zedelgem (BE); Missotten, Bart M.A., 8210 Zedelgem (BE); Deruyter, Lucas, 8210 Zedelgem (BE); Scotti, Francesco, 1831 Machelen (BE)
(74) Representative: CNH Industrial IP Department

(57) **Abstract**

An agricultural harvester (10), comprising a header (18), a feedback sensor (82) for generating a feedback signal representative of a current feed rate of crop through the harvester (10), a feed forward sensor (84) for generating a feed forward signal representative of a biomass of crop ahead of the header (18), and a controller (100) operably coupled to the feedback sensor (82) and the feed forward sensor (84). The controller (100) determines a predicted feed rate of crop through the harvester (10) based on the feed forward signal and an actual feed rate of crop through the harvester (10) based on the feedback signal. The controller (100) controls an operational setting of the agricultural harvester (10) in dependence of a discrepancy between the predicted feed rate and the actual feed rate.

## Description

### TECHNICAL FIELD

The present invention relates to an agricultural harvester and a method for controlling an agricultural harvester.

### BACKGROUND

Combine harvesters, also simply called combines, are complex driving agricultural machinery comprising a variety of mechanical tools for reaping grain crops from a field, feeding the reaped crop into the crop processing core of the combine, threshing the grain, and separating the threshed grain from the straw and other non-grain material. In most combine harvesters, a cleaning system is provided for separating the chaff from the grain kernels. The cleaned grain is then transported from the cleaning system to a grain tank wherein the grain is temporarily stored until the grain tank is unloaded into a trailer or at a grain storage facility.

Due to, e.g., variations in crop height, crop density, and a ground speed of the harvester, the feed rate of the harvester, i.e., the amount of crop that is being processed per unit of time, may vary during the harvesting operation. These feed rate variations may require continuous adaptation of multiple operational parameters of the harvester to ensure efficient and effective harvesting with minimal loss of crop. Furthermore, large peaks in feed rate may cause blockages in various crop processing parts of the harvester. Accordingly, the rate at which crop is reaped and taken in by the harvester is ideally kept as constant as possible, such that the harvester can operate at an as high as possible feed rate without risking any blockages.

To achieve a constant and high feed rate, it is known to use feed rate sensors, e.g. installed in a feeder of the harvester, to monitor the feed rate and to adapt relevant operational settings of the harvester in response thereto. While this control strategy has proven to improve the crop flow through the harvester, further improvements are desirable. It is an aim of the present invention to realise such further improvements.

### SUMMARY OF THE INVENTION

According to an aspect of the invention there is provided an agricultural harvester, comprising a header, a feedback sensor, a feed forward sensor, and a controller. The feedback sensor is configured to generate a feedback signal representative of a current feed rate of crop through the harvester. The feed forward sensor is configured for generating a feed forward signal representative of a biomass of crop ahead of the header. The controller is operably coupled to the feedback sensor and the feed forward sensor and respectively receives the feedback signal and the feed forward signal. The controller is configured to determine a predicted feed rate of crop through the harvester based on the feed forward signal and an actual feed rate of crop through the harvester based on the feedback signal. The controller then controls an operational setting of the agricultural harvester in dependence of a discrepancy between the predicted feed rate and the actual feed rate.

A first advantage of calculating the discrepancy between the actual measured feed rate and the predicted feed rate is that this can be used for improving the prediction algorithm and increasing the accuracy of future predictions. Another advantage of calculating this discrepancy is that it provides a good approximation of any feed rate fluctuation that is caused by crop flow disturbances in the header. These 'header caused feed rate fluctuations' may, e.g., occur when the crop height and crop density vary along the width of the header, when heaps of reaped crop temporarily accumulate on a draper belt, or in an intake auger, or when some of the crop fails to smoothly transition from one header part to the other. Controlling operational settings of the harvester in dependence of the calculated discrepancy makes it possible to provide a more consistent crop flow in the header and into the feeder, thereby also allowing for a more constant feed rate through the harvester, increasing efficiency and optimizing the harvesting operation.

In preferred embodiments of the invention, the controlled operational setting of the agricultural harvester may be an operational setting of the header. When header caused feed rate fluctuations are observed, changes in the operational settings of the header can be used to reduce such fluctuations when so desired. Such adaptive measures can both be reactive, to supress the fluctuations when it starts to occur, or pro-active, to avoid future fluctuations when the data suggests that they may be imminent.

In exemplary embodiments, the header may comprise a header frame carrying a cutter bar and a single or multi-segment rotatable reel. The header may further comprise a draper belt and/or an intake auger. The controlled operational setting of the header may, e.g., comprise a height of the cutter bar above ground, a position of the reel relative to the header frame, a rotational speed of the reel, a position of the cutter bar relative to the header frame, a speed of the draper belt, a rotational intake speed of the intake auger, or a reel finger angle. The adjustment of these and other header settings may help to enable precise control of the operation of the header, thereby further increasing the accuracy of control of the crop flow in the header and/or in the harvester.

The feedback sensor may be provided in the form of, e.g., a feed rate sensor mounted to a feeder of the harvester, a threshing load sensor for measuring a load on a threshing system of the harvester, an engine load sensor for measuring an engine load on an engine of the harvester, or a torque sensor for measuring a torque on the reel or intake auger. These, and other, feedback sensors allow the actual feed rate to be accurately measured in different locations and using various sensing techniques. Preferably, a combination of two or more different types of feedback sensor are used for increasing the accuracy of the actual feed rate.

The feed forward sensor may be provided in the form of, e.g., an optical, acoustic, or electromagnetic sensor configured for observing an area ahead of the header, such as a LiDAR sensor, a RADAR sensor, a video camera, or an ultrasonic sensor. For improved accuracy in different circumstances, a combination of different types of feed forward sensors may be used. The feed forward sensors allow the biomass of crop ahead of the harvester to be observed in real time which increases the accuracy of the predicted feed rate.

Alternatively, or additionally, the feed forward sensor may comprise a GPS sensor which is operably coupled to the controller. The controller is configured to receive a location signal from the GPS sensor and to determine the predicted feed rate based on the location signal and a stored yield map. The yield map provides location-specific data concerning the biomass of crop ahead of the header. Such yield maps can be obtained in various ways, such as from satellite data, from observation by an unmanned aerial vehicle, from historic data from earlier growth seasons or observations made during a recent spraying operation in the same field. A combination of direct observation by optical and/or acoustic sensors with stored GPS-referenced yield data may help to further increase the accuracy of the predicted feed rate.

In some embodiments, the operational setting of the agricultural harvester may comprise a ground speed of the harvester. Adaptation of the ground speed to temporarily increase or decrease the amount of crop that is taken in may help to reduce or adapt to the observed or predicted header caused feed rate fluctuations.

The discrepancy between the predicted feed rate and the actual feed rate may, for example, be calculated in a time domain, a frequency domain, or by means of a neural network, thereby improving the processing of the discrepancy.

According to another aspect of the invention, the controller may be configured to control the operational setting of the agricultural harvester to reduce the discrepancy between the predicted feed rate and the actual feed rate and/or to reduce fluctuations in the actual feed rate. This improves the stability of the flow of crop through the header and/or the harvester and so optimises the harvesting operation.

According to another aspect of the invention, there is provided a method for controlling an agricultural harvester comprising a header. The method starts with a step of receiving a feedback signal representative of a current feed rate of crop through the harvester, and a feed forward signal representative of a biomass of crop ahead of the header. Based on the feedback signal, an actual feed rate of crop through the harvester is determined. Based on the feed forward signal, a predicted feed rate of crop through the harvester is determined. An operational setting of the agricultural harvester is then controlled in dependence of a discrepancy between the predicted feed rate and the actual feed rate.

The feed forward signal may, for example, be received from a feed forward sensor mounted to a drone that is overseeing a harvesting operation performed by the agricultural harvester. Compared to harvester mounted, or header mounted, feed forward sensors, feed forward sensors installed on drones, also called unmanned aerial vehicles (UAV), bring the advantage that they are not restricted in terms of position and point of view. A drone can fly a bit further ahead of the harvester, look at the field from different angles and without its view being obstructed by dust clouds that may be created by the harvesting process.

### BRIEF DESCRIPTION OF THE DRAWINGS

Embodiments of the invention will now be described by way of example with reference to the accompanying drawings, in which:
Figure 1 schematically shows a combine harvester wherein the invention may be implemented.
Figure 2 shows an operational flow diagram of a feed rate control loop for the harvester of Figure 1.
Figure 3 shows a graphical representation of a feed rate of crop through the harvester of Figure 1 implementing the feed rate control loop of Figure 2.
Figure 4 shows a simplified flow chart of a method for use with the harvester of Figure 1.

### DETAILED DESCRIPTION

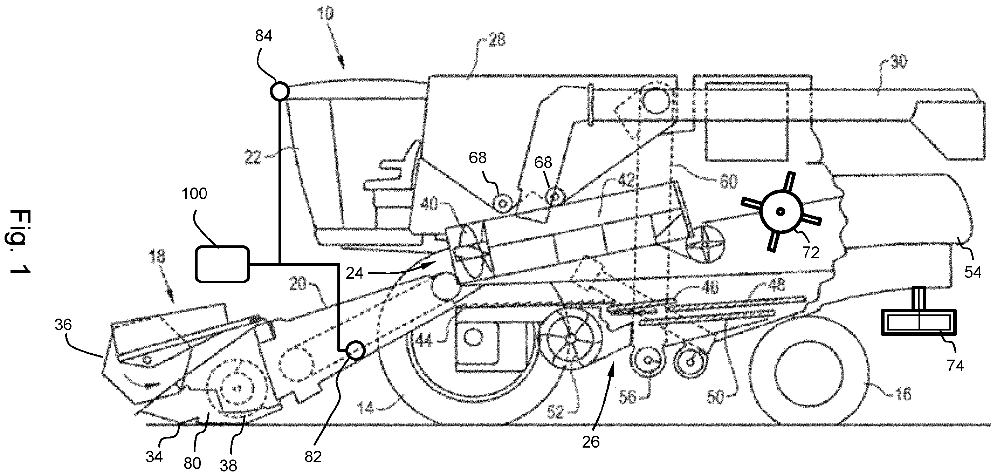

Figure 1 schematically shows an agricultural harvester in the form of a combine harvester 10. A combine harvester 10 as shown in Figure 1 generally includes front and rear ground engaging wheels 14, 16, a header 18, a feeder 20, an operator cabin 22, a threshing and separation system 24, a cleaning system 26, a grain tank 28 and an unloading tube 30.

The header 18 is mounted to the front of the combine harvester 10 and includes a cutter bar 34 for severing crops from a field during forward motion of the harvester 10. A single or multi-segment rotatable reel 36 feeds the crop into the header 18, and an intake auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a chopper 72 and spread over the field across the full width of the header 18 by a spreader system 74. The spreader system 74 typically comprises a left and a right rotary spreader, each spreading the chopped crop residue received from the chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

It is to be noted that, although the example presented in the drawings and the description is a grain header 18 with an intake auger 38 and (possibly) one or more draper belts, the invention is equally applicable and useful for other types of headers, such as a corn header, or sun-flower header.

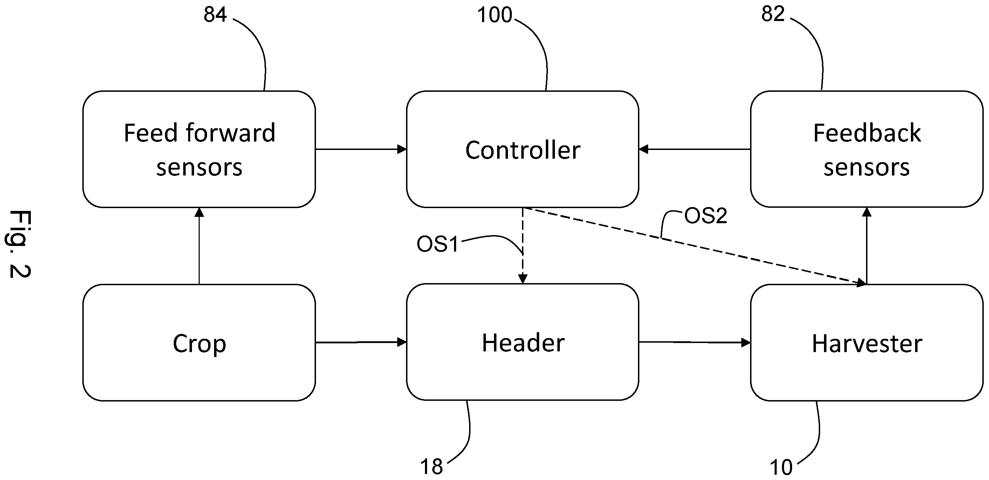

Figure 2 shows an operational flow diagram of a feed rate control loop for the harvester 10 of Figure 1 and is implemented by a control unit or controller 100 comprised in or coupled to the harvester 10. The controller 100 is configured to monitor and control a number of operational settings of the header 18 and/or the harvester 10. Control actions to adjust the operational settings of the header 18 and/or the harvester 10 are represented in Figure 2 by the arrows OS1 and OS2, respectively. The controller 100 may be located within the header 18 or in the harvester 10. Alternatively, various control functions are distributed over interconnected controllers at different locations.

The controlled operational settings may include, for example, operational settings of the header 18 on which the cutter bar 34, rotatable reel 36, intake auger 38, and a draper belt are mounted. The operational settings of the header 18 may, for example, include a height of the cutter bar 34 above the ground, a position of the cutter bar 34 relative to the header frame 80, a position of the reel 36 relative to the header frame 80, a position of a segment of the reel 36 relative to the header frame 80, a rotational speed of the reel 36, a reel finger angle, a rotational speed of the intake auger 38, a height of the intake auger 38 above the ground, a rotational speed of an upper cross auger, and a speed of the draper belt (including independent control of a speed of a left, right, and centre draper belt).

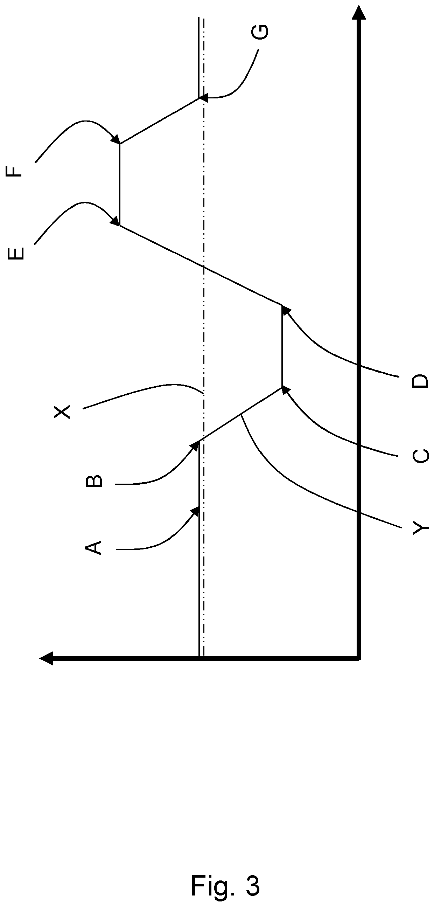

The actual feed rate of crop through the harvester 10 represents the amount of crop that is processed by the harvester 10 per unit of time. The actual feed rate may be determined by measuring a current feed rate of crop through the header 18 and/or harvester 10 and is dependent on the amount of crop that is standing on the field and on many operational settings of the header 18 and the harvester 10, such as harvester ground speed and header height. The actual feed rate may vary over time and throughout the harvester 10. For example, the header 18, feeder 20 and threshing section 24 process larger volumes of biomass than the cleaning section 26 and the clean grain elevator 60. Over longer time spans, some parts of the harvester 10, for example the header 18 and feeder 20 may experience similar average feed rates, but when the crop flow through the harvester 10 is partly obstructed, crop may temporarily accumulate in specific parts of the harvester 10. As a direct result of such an obstruction, the actual feed rate will temporarily be lower immediately downstream of the temporary crop accumulation and will raise quickly as soon as the obstruction is gone (for example as illustrated in Figure 3). Accordingly, variations in the actual feed rate occur over time and may differ throughout the harvester 10, even if a perfectly constant crop flow is picked up from the field by the header 18.

Such a perfectly constant crop flow is, however, unlikely to occur. The actual feed rate also depends on the amount of biomass of crop that is taken from the field by the harvester 10. This amount may vary with the driving speed of the harvester 10 and depends on field parameters such as crop height and crop density. Fluctuations in the actual feed rate can be caused by changes in the field parameters and crop properties, possibly resulting in the operational settings of the header 18 and/or harvester 10 becoming sub-optimal for maintaining a constant feed rate. An estimate of the amount of biomass in front of the header 18 is therefore used to predict an upcoming flow of crop through the harvester 10. By comparing the current feed rate to the previously predicted feed rate, differences or discrepancies between the predicted and the actual flow of crop through the harvester 10 can be detected. The operational settings of the header 18 and/or harvester 10 can therefore be controlled to minimise these discrepancies and thus ensure a consistent crop flow and optimal actual feedrate through the harvester 10.

One or more feed rate or feedback sensors 82 are configured to generate feedback signals representative of the current feed rate and crop flow through the header 18 and/or the harvester 10 based on the measurements taken from the various modules of the harvester 10. The controller 100 is operably coupled to the feedback sensors 82 and receives the feedback signals therefrom. The controller 100 is configured to determine the actual feed rate of crop through the header 18 and/or harvester 10 based on the feedback signals. The accuracy of the actual feed rate measurement can be improved when using a combination of multiple and various types of different feedback sensors 82.

The feedback sensors 82 may, for example, take the form of feed rate sensors 82 and may be coupled to the header 18, the feeder 20, the threshing and separation system 24, an engine of the harvester 10, and/or other suitable modules of the harvester 10. For example, the feed rate sensors 82 may comprise cameras or mass flow sensors for direct measurement of a crop flow. A position sensor may monitor a position of a front drum of the feeder 20 and thereby provide a reliable measure for the feed rate. The feedback sensor 82 may be a threshing load sensor for measuring a load on the threshing system and separation system 24, an engine load sensor for measuring an engine load on the engine of the harvester 10, a torque load sensor for measuring a torque on the intake auger 38 or on internal shafts within the harvester 10, a load cell for measuring a tension on one of the draper belts, or a feeder drum position sensor for detecting a feeder drum position. The feedback sensors 82 allow the current feed rate to be measured in different locations in the harvester 10 using different metrics and techniques, thereby improving the accuracy of the current feed rate.

The feedback sensor signals may further be used to analyse a possible location of or cause for any header caused feed rate fluctuations and other observed discrepancies between the measured feed rate and the predicted feed rate. For example, cameras and crop flow sensors may be used for this purpose. One of the feedback sensors 82 may be a video camera that observes the flow of crop through the header 18. Based on an analysis of this video camera, it may be detected that crop material is accumulating at a left, right, or centre draper belt, that crop material is piling up in front of the intake auger 38, or that 'backfeeding' occurs. Backfeeding is where reaped crop falls back from the intake auger 38 onto a belt or floor of the header 18 in front of that intake auger 38 instead of being fed into the feeder 20. Depending on the perceived cause of the header caused feed rate fluctuations, different corrective measures may be performed and operational setting of the header 18 and/or the harvester 10 may be adjusted. After such adjustment, continued monitoring of the predicted and actual feed rates can be used to evaluate the effectiveness of the corrective measures and further adaptations to the operational settings may be made. In more advanced implementations, a self-learning control algorithm may be used to continuously improve the effectiveness harvester operation and the stability of the actual feed rate.

To measure or estimate the amount of biomass of crop in front of the harvester 10, and to be able to derive the predicted feed rate therefrom, the harvester 10 comprises one or more feed forward sensors 84. The feed forward sensors 84 generate feed forward signals representative of a biomass of crop ahead of the header 18 and may be mounted to the header 18 and/or the harvester 10 on, for example, a roof of the operator cabin 22. For example, the feed forwards sensors 84 may comprise an optical, acoustic, or electromagnetic sensor, such as LiDAR sensors, RADAR sensors, video cameras, multispectral cameras, and/or ultrasonic sensors, and observe an area in front of the harvester 10 to take measurements of the crop. In another example, the feed forward sensors 84 may be mounted to a left or right side of the header 18 and/or harvester 10 and are configured to measure or estimate the amount of biomass of crop to the left or right side of the harvester 10, such that the properties of the crop to be harvested in a future pass can be stored in the controller 100 or an external memory coupled to the controller 100.

The feed forward sensor 84 may comprise a GPS sensor operably coupled to the controller 100 for providing location signals indicating the position of the harvester 10 in the field. When this information is combined with stored yield maps of the specific area traversed by the harvester 10, the amount of biomass immediately in front of the harvester 10, and thus a predicted feed rate, can be estimated accurately. The yield maps may be obtained in a number of different ways, for example from satellite data, from observations made by an unmanned aerial vehicle or drone, from historic data from earlier harvesting or growth seasons, and/or observations made during recent spraying, weeding, or fertilising operations in the relevant field. A drone may oversee the harvesting operation being performed by the harvester 10 and relay live observations or measurements from the mounted feed forward sensor 84 in real time. Unlike feed forward sensors 84 that are mounted to the header 18 and the harvester 10, feed forward sensors 84 mounted on drones are not restricted by their position or point of view. By viewing the crop ahead of the header 18 in different positions and from different points-of-views, measurements can be taken that would otherwise not be possible using more statically mounted feed forward sensors 84 due to, for example, dust clouds that form when harvesting which could obscure other feed forward sensors 84. This allows more accurate observations and measurements to be relayed to the controller 100.

The controller 100 is operably coupled to the feed forward sensors 84 and receives the feed forward signals produced by the feed forward sensors 84. The controller 100 is configured to determine a predicted feed rate of crop based on the biomass of crop in front of the harvester 10 represented by the feed forward signals. The accuracy of the predicted feed rate can be improved when using a combination of different feed forward sensors 84. The controller 100 may be configured to calculate the predicted feed rate by applying the feed forward signals to a prediction algorithm or computer model. Such a prediction model may be a linear, non-linear, or dynamic model. The prediction model may be self-learning and evolve over time based on data from various data input sources. The inputs to the prediction model may be the feed forward signals and/or other operational settings of the harvester 10, such as a ground speed of the harvester 10. The prediction model is programmed to take into account the measurements of the biomass of the crop and the time it will take for the crop to reach the harvester 10 or specific locations inside the harvester 10. Observed crop flow delays and various aspects of such crop flow delays can be registered and used for training the prediction algorithms and improving the predictions over time. This further increases the accuracy of the predicted feed rate such that the predicted feed rate better matches the actual feed rate.

The controller 100 is configured to detect any discrepancies that might occur between the current feed rate and the predicted feed rate. A discrepancy may indicate an irregular flow of crop inside the header 18 and/or the harvester 10 and may be caused by operational settings of the header 18 and/or the harvester 10 being sub-optimal or incorrect at that point in time. Such header caused feed rate fluctuations may occur, for example, because of variations in crop height and densities along the width of the header 18, if heaps of reaped crop temporarily gather or accumulate on the draper belt or in the intake auger 38, or when crop fails to smoothly transition from one part of the header 18 to another.

The discrepancy between the predicted feed rate and the current feed rate may, for example, be calculated by the controller 100 in a time domain, whereby the discrepancy is calculated as the mathematical difference between the predicted feed rate and the current feed rate. The discrepancy may be calculated in a frequency domain by the strength or magnitude of certain frequencies in the time domain. In this case, the discrepancy may be calculated by the difference of the frequency spectrums at a specific set of frequencies of the predicted feed rate and the current feed rate. The discrepancy may also be calculated by means of a neural network or an artificial intelligence algorithm/program. These implementations improve the processing and efficiency with which the discrepancy is determined to ensure the controller 100 adjusts the operational settings accurately and appropriately in accordance with the situation.

The controller 100 may further be configured to control an operational setting of the harvester 10 in dependence of the discrepancy between the predicted feed rate and the actual feed rate. For example, the controller 100 may be configured with pre-set control actions that control the operational settings of the harvester 10 by specific amounts to provide fast and/or emergency control actions or to provide longer term control for preventing future crop flow fluctuations. The operational settings of the header 18 and/or harvester 10 may be adjusted actively in response to real-time situations and discrepancies. The operational settings may be adjusted pro-actively to prevent potential future discrepancies that may be imminent, as determined based on the feed forward signals. This enables accurate and precise control of the crop flow in the header 18 and through the harvester 10 and so allows the harvester 10 to maintain a continuous flow of crop when harvesting.

For example, the operational settings of the harvester 10 may include the ground speed of the harvester 10. The ground speed determines the volume of crop that is incident on the header 18 per unit time for a given biomass of crop. Adjusting the ground speed of the harvester 10 can temporarily increase or decrease the amount of crop that is reaped, therefore helping to reduce or eliminate fluctuations in the actual feed rate or discrepancies between the predicted feed rate and the current feed rate. Moreover, the stability of the flow of crop into and through the header 18 and/or the harvester 10 is also improved.

The controlled operational settings may further include, for example, operational settings of the header 18 on which the cutter bar 34, rotatable reel 36, intake auger 38, and a draper belt are mounted. The controlled operational settings of the header 18 may, for example, include a height of the cutter bar 34 above the ground, a position of the cutter bar 34 relative to the header frame, a position of the reel 36 relative to the header frame, a position of a segment of the reel 36 relative to the header frame, a rotational speed of the reel 36, a reel finger angle, a rotational speed of the intake auger 38, a height of the intake auger 38 above the ground, a rotational speed of an upper cross auger, and a speed of the draper belt (including independent control of a speed of a left, right, and centre draper belt).

At point B, an irregularity in the crop flow occurs within the harvester 10 and causes a discrepancy between the predicted feed rate and the current feed rate. In this example, the discrepancy may be caused by a build-up of crop in the header 18 from reaping a dense area of lodged crop, resulting in a temporary reduction in the flow of crop through the header 18 and the harvester 10.

At point C, the controller 100 detects the discrepancy. The discrepancy may be detected if, for example, the difference between the predicted feed rate and the current feed rate crosses a threshold, or if the difference between the predicted feed rate and the current feed rate persists over a threshold period of time. Upon detection of the discrepancy, the controller 100 is configured to generate a control signal for adjusting the one or more operational settings of the header 18 and/or harvester 10.

At point D, the controller 100 sends the control signal to the header 18 and adjusts the relevant operational settings causing an increase in the current feed rate to reduce the discrepancy. As the built-up crop that initially caused the discrepancy is processed, the current feed rate temporarily increases above the predicted feed rate due to the increased volume of the built-up crop.

At point E, the main bulk of the built-up crop is being processed by the harvester 10. At point F, the majority of the built-up crop has been processed and so the current feed rate reduces as the flow of crop returns to a normal level, reducing the discrepancy.

At point G, the built-up crop has been processed therefore reducing the discrepancy such that the current feed rate and the predicted feed rate are substantially aligned at the same level as at point A. Normal operations and feed rates can henceforth be maintained by the harvester 10 until another discrepancy is detected.

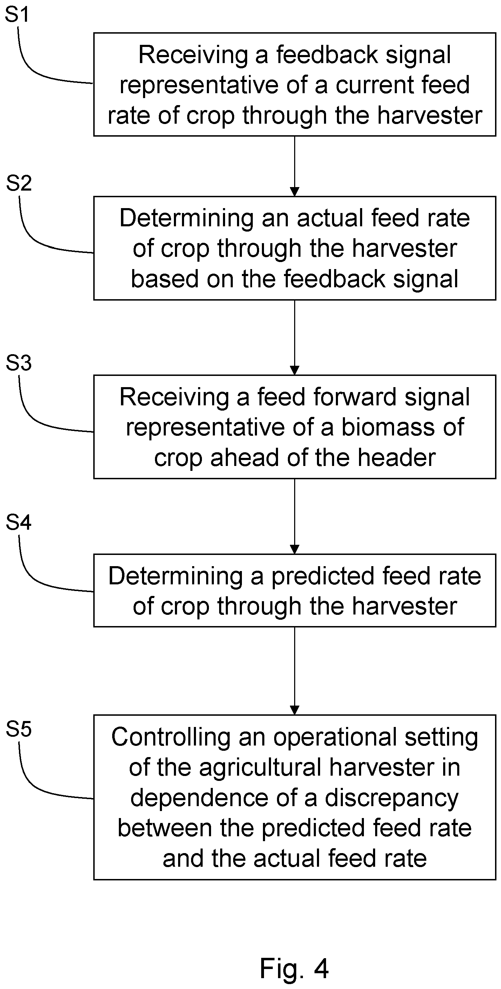

Figure 4 shows a simplified flow chart for controlling the harvester 10 comprising the header 18. The flow chart provides a method for controlling the harvester 10 to maintain a continuous flow of crop through the harvester 10.

At step S1, the feedback signal representative of a current feed rate of crop through the harvester 10 is received. At step S2, the actual feed rate of crop through the harvester 10 is determined based on the feedback signal. Steps S1 and S2 may occur continuously such that the actual feed rate is automatically and immediately updated in response to changes in the actual feed rate through the harvester 10 in real-time.

At step S3, the feed forward signal representative of a biomass of crop ahead of the header 18 is received. At step S4, a predicted feed rate of crop through the harvester 10 is determined based on the feed forward signal. Steps S3 and S4 may occur continuously such that the predicted feed rate is automatically and immediately updated in response to changes in the biomass of crop in front of the header 18 in real-time.

Steps S1 and S3 may occur concurrently or separately. The skilled person would readily understand that the numbering of steps S1 and S3 does not reflect their respective order or sequence during operation.

At step S5, an operational setting of the harvester 10 is controlled in dependence of a discrepancy between the predicted feed rate and the actual feed rate. The discrepancy between the predicted feed rate and the actual feed rate may contribute to irregularities in crop flow, therefore reducing the discrepancy acts to improve the maintenance of a continuous flow of crop through the header 18 and/or harvester 10.

## Claims

1. An agricultural harvester (10), comprising:
a header (18);
a feedback sensor (82) for generating a feedback signal representative of a current feed rate of crop through the harvester (10);
a feed forward sensor (84) for generating a feed forward signal representative of a biomass of crop ahead of the header (18);
a controller (100), operably coupled to the feedback sensor (82), and the feed forward sensor (84) to respectively receive the feedback signal and the feed forward signal therefrom, and configured to:
based on the feed forward signal, determine a predicted feed rate of crop through the harvester (10);
based on the feedback signal, determine an actual feed rate of crop through the harvester (10);
control an operational setting of the agricultural harvester (10) in dependence of a discrepancy between the predicted feed rate and the actual feed rate.

2. The harvester (10) of any preceding claim, wherein the operational setting of the agricultural harvester (10) comprises an operational setting of the header (18).

3. The harvester (10) of claim 2, wherein the header (18) comprises a header frame (80) carrying a cutter bar (34) and a rotatable reel (36), wherein the operational setting of the header (18) comprises:
- a height of the cutter bar (34) above ground;
- a position or orientation of the cutter bar (34) relative to the header frame (80);
- a position of the reel (36) or a reel segment relative to the header frame (80);
- a rotational speed of the reel (36);
- a reel finger angle;
- a rotational speed of an intake auger (38) mounted to the header frame (80);
- a position of the intake auger (38) relative to the header frame (80);
- a speed of a draper belt mounted to the header frame (80); or
- a rotational speed of an intake auger (38) mounted to the header frame (80).

4. The harvester (10) of any preceding claim, wherein the feedback sensor (82) is:
- a feed rate sensor mounted to a feeder of the harvester (10);
- a threshing load sensor for measuring a load on a threshing system of the harvester (10);
- a torque load sensor for measuring a torque on a reel (36) of the header (18);
- a torque load sensor for measuring a torque on an intake auger (38) of the header (18); or
- an engine load sensor for measuring an engine load on an engine of the harvester (10).

5. The harvester (10) of any preceding claim, wherein the feed forward sensor (84) comprises an optical sensor, an electromagnetic sensor, or an acoustic sensor configured for observing an area ahead of the header (18).

6. The harvester (10) of claim 5, wherein the feed forward sensor (84) comprises a LiDAR sensor, a RADAR sensor, a video camera, or an ultrasonic sensor.

7. The harvester (10) of any preceding claim, wherein the feed forward sensor (84) comprises a GPS sensor, operably coupled to the controller (100), and wherein the controller (100) is further configured to receive a location signal from the GPS sensor and to determine the predicted feed rate based on the location signal and a stored yield map, the yield map providing location-specific data concerning the biomass of crop ahead of the header (18).

8. The harvester (10) of any preceding claim, wherein the operational setting of the agricultural harvester (10) comprises a ground speed of the harvester (10).

9. The harvester (10) of any preceding claim, wherein the discrepancy between the predicted feed rate and the actual feed rate is calculated in a time domain, in a frequency domain, or by means of a neural network.

10. The harvester (10) of any preceding claim, wherein the controller (100) is further configured to control the operational setting of the agricultural harvester (10) to reduce the discrepancy between the predicted feed rate and the actual feed rate.

11. The harvester (10) of any preceding claim, wherein the controller (100) is further configured to control the operational setting of the agricultural harvester (10) to reduce fluctuations in the actual feed rate.

12. The harvester (10) of any preceding claim, wherein the controller (100) is further configured to analyse a location or cause of the discrepancy between the predicted feed rate and the actual feed rate based on the feedback signals.

13. The harvester (10) of claim 12, wherein the controller (100) is further configured to control the operational setting of the agricultural harvester (10) based on the location or cause of the discrepancy between the predicted feed rate and the actual feed rate.

14. A method for controlling an agricultural harvester (10) comprising a header (18), the method comprising:
receiving a feedback signal representative of a current feed rate of crop through the harvester (10);
based on the feedback signal, determining an actual feed rate of crop through the harvester (10);
receiving a feed forward signal representative of a biomass of crop ahead of the header (18);
based on the feed forward signal, determining a predicted feed rate of crop through the harvester (10); and
controlling an operational setting of the agricultural harvester (10) in dependence of a discrepancy between the predicted feed rate and the actual feed rate.

15. A method for controlling an agricultural harvester (10), wherein the feed forward signal is received from a feed forward sensor (84) mounted to a drone that is overseeing a harvesting operation performed by the agricultural harvester (10).
